# EUROPÄISCHE PATENTSCHRIFT

(11) **EP 2 411 271 B1**
(45) Veröffentlichungstag und Bekanntmachung des Hinweises auf die Patenterteilung: **20.04.2016**
(21) Anmeldenummer: 10706991.6
(22) Anmeldetag: 25.02.2010
(51) Int. Cl.: B64D 11/00

(54) **TRANSFORMIERBARES GEPÄCKSTAUFACH FÜR EINE FLUGZEUGKABINE**
TRANSFORMABLE LUGGAGE STORAGE COMPARTMENT FOR AN AIRCRAFT CABIN
COMPARTIMENT À BAGAGES TRANSFORMABLE POUR UNE CABINE D'AVION

(30) Priorität: 24.03.2009 DE 102009014573; 24.03.2009 US 162795 P
(43) Veröffentlichungstag der Anmeldung: 01.02.2012
(73) Patentinhaber: Airbus Operations GmbH, 21129 Hamburg (DE)
(72) Erfinder: MAYER, Tobias, 20146 Hamburg (DE); LERCHE, Thomas, 21635 Jork (DE)
(74) Vertreter: Kopf Westenberger Wachenhausen Patentanwälte PartG mbB
(86) Internationale Anmeldenummer: PCT/EP2010/052440
(87) Internationale Veröffentlichungsnummer: WO 2010/118913

(56) Entgegenhaltungen:
- EP-A1- 0 718 189
- WO-A1-2006/087183
- US-A1- 2002 101 090

## Beschreibung

### Gebiet der Erfindung

Die Erfindung betrifft Gepäckfächer von Transportmitteln. Insbesondere betrifft die Erfindung ein Gepäckfach für ein Luftfahrzeug zur Anbringung in einem Überkopfbereich, ein transformierbares Behältermodul für ein Gepäckfach, ein Gehäusemodul für ein Gepäckfach, ein Luftfahrzeug und ein Verfahren zum Umbau eines transformierbaren Behältermoduls.

### Technologischer Hintergrund

In heutigen Luftfahrzeugen sind zwei Arten von Staufächern in Gebrauch. Zum einen handelt es sich um sogenannte "Fixed Bins", die starr eingebaut sind. Zum anderen handelt es sich um sogenannte "Movable Bins" oder "Pivot-Bins", die beispielsweise durch Verkippen von einer geschlossenen Stellung in eine geöffnete Stellung heruntergeklappt werden können. Bei der Ausrüstung und Konfiguration der Passagierkabine wird im Regelfall entweder das eine oder das andere Staufach in dem entsprechenden Kabinenabschnitt eingebaut.

Für Kurzstreckenflüge (innerhalb des Short Range Programms) sind heute Fixed Bins in Gebrauch. Diese zeichnen sich durch robuste Bauweise und verhältnismäßig geringe Anforderungen an die technische Komplexität aus. Allerdings ragen diese starr eingebauten Staufächer in die Kabine hinein und lassen die Kabine somit enger erscheinen.

Die beweglichen Staufächer (Pivot-Bins) bestehen aus einem Gehäuse (Housing) und einer beweglichen Schütte, in die das Gepäckstück geladen wird. Die Schütte gewährleistet in geöffnetem Zustand des Staufachs eine ergonomisch vorteilhafte Ladehöhe. In geschlossenem Zustand wirkt sich das bewegliche Staufach in der Regel positiv auf den Raumeindruck aus, da es nach oben weggeklappt ist. Allerdings sind die beweglichen Staufächer verhältnismäßig schwer und oft technisch komplexer als die fest fixierten Staufächer, insbesondere aufgrund der erforderlichen Kinematik und der angepassten Mechanik zur Verringerung der aufzubringenden Betätigungskräfte.

Je nach Endkunde haben die oben genannten Eigenschaften unterschiedliche Gewichtung. Wechselt das Luftfahrzeug den Besitzer, ist (oft) ein aufwändiger Umbau der Kabine notwendig, um die Kabine an die entsprechenden Kundenwünsche anzupassen.

Da beide Staufächer verschiedene Befestigungs-Koordinaten aufweisen, ist ein solches Austauschen aufwändig und in manchen Fällen sogar unmöglich.

DE 10 2007 030 331 A1 und WO 2009/003945 A1 beschreiben Staufachmodule für einen Innenraum eines Flugzeugs, welches ein Gehäuse und einen Behälter aufweist.

WO 2006/087183 A1 beschreibt ein Gepäckfach für ein Luftfahrzeug mit einem Gehäuse und einer verkippbaren Schütte.

US 2002/0101090 A1 beschreibt ein Überkopf-Gepäckfach für ein Luftfahrzeug, welches zum Beladen nach unten verkippt wird.

EP 0 718 189 A1 beschreibt ein nachgerüstetes Gepäckfach.

### Zusammenfassung der Erfindung

Es ist eine Aufgabe der Erfindung ein flexibel nutzbares Gepäckfach für die Kabine eines Transportmittels anzugeben. Es sind ein transformierbares Behältermodul für ein Gepäckfach für ein Luftfahrzeug zur Anbringung in einem Gehäusemodul, ein Gepäckfach für ein Luftfahrzeug zur Anbringung in einem Überkopfbereich, ein Luftfahrzeug mit zwei Reihen von Gepäckfächern und ein Verfahren zum Umbau eines transformierbaren Behältermoduls gemäß den Merkmalen der unabhängigen Ansprüche angegeben. Weiterbildungen der Erfindung ergeben sich aus den Unteransprüchen.

Gemäß einem Ausführungsbeispiel der Erfindung ist ein Gepäckfach für ein Luftfahrzeug zur Anbringung in einem Überkopfbereich (beispielsweise in der Passagierkabine des Luftfahrzeugs) angegeben, welches ein universelles Gehäusemodul und ein transformierbares Behältermodul aufweist. Das Gehäusemodul ist zur Aufnahme des Behältermoduls ausgeführt, wobei das Behältermodul zur Aufnahme von Gepäckstücken dient. Das Behältermodul ist sowohl zum starren Einbau in das Gehäusemodul im Zustand eines fixierten Behälters und zum beweglichen Einbau in das Gehäusemodul im Zustand einer beweglichen Schütte ausgeführt.

In anderen Worten kann das Behältermodul von dem einen Zustand in den anderen Zustand transformiert werden. Hierfür kann ein Umbau des Moduls erforderlich sein. Das Gehäusemodul muss hierfür allerdings nicht verändert werden. In keinem Fall ist ein Austausch des Gehäusemoduls notwendig.

Auf diese Weise ist es möglich, dass das Gepäckfach entsprechend dem gewünschten Kabinenlayout umgerüstet wird. Einerseits kann es eine bewegliche Schütte aufweisen und andererseits einen fest fixierten starr eingebauten Behälter (Fixed Bin).

Ein Umrüsten kann somit auf einfache Art mit geringem Aufwand erfolgen, ohne die angrenzenden Bauteile wie die Decken-Panele oder die seitliche Wandverkleidungen und den Passagierversorgungskanal zu beeinflussen.

Gemäß einem weiteren Ausführungsbeispiel der Erfindung ist das Behältermodul innerhalb des Gehäusemoduls von dem Zustand als fixierter Behälter in den Zustand als bewegliche Schütte überführbar bzw. umbaubar.

Das Behältermodul muss für die Transformation nicht extra ausgebaut werden. Vielmehr ist es mit wenigen Handgriffen oder, in einer automatisierten Ausführungsform, einfach per Knopfdruck möglich, das Behältermodul und damit des Gepäckfach zu transformieren.

Gemäß einem weiteren Ausführungsbeispiel der Erfindung weist das Behältermodul im Zustand als fixierter Behälter eine Staufachklappe auf. Im Zustand als bewegliche Schütte weist das Behältermodul hingegen die Staufachklappe nicht auf.

Im letztgenannten Fall befindet sich die Staufachklappe beispielsweise innerhalb des Gehäusemoduls. Die Staufachklappe ist also an dem Gehäusemodul (bzw. in dem Gehäusemodul) angebracht, wenn sich das Behältermodul im Zustand als bewegliche Schütte befindet.

Gemäß einem weiteren Ausführungsbeispiel der Erfindung weist das Gepäckfach weiterhin ein Schienensystem zum Führen der Staufachklappe von einem Zustand, in dem die Staufachklappe an dem Gehäusemodul befestigt ist, in einem Zustand, in dem die Staufachklappe an dem Behältermodul befestigt ist, auf.

Gemäß einem weiteren Ausführungsbeispiel der Erfindung weist das Gepäckfach eine Verriegelung zum Verriegeln des Behältermoduls auf, wenn das Behältermodul sich im Zustand als fixierter Behälter befindet.

Gemäß einem weiteren Ausführungsbeispiel der Erfindung weist das Behältermodul im Zustand als fixierter Behälter ein größeres Speichervolumen auf, als im Zustand als bewegliche Schütte.

Gemäss der Erfindung wird, um den Zustand des fixierten Behälters einzunehmen, ein Deckensegment des Behältermoduls nach oben geklappt.

Gemäß der Erfindung ist ein transformierbares Behältermodul für ein Gepäckfach für ein Luftfahrzeug zur Anbringung in einem Gehäusemodul in einem Überkopfbereich der Passagierkabine angegeben, wobei das Gehäusemodul zur Anbringung des Behältermoduls ausgeführt ist und wobei das Behältermodul zur Aufnahme von Gepäckstücken dient. Das Behältermodul ist, wie bereits oben beschrieben, zum starren Einbau in das Gehäusemodul im Zustand eines fixierten Behälters und zum beweglichen Einbau in das Gehäusemodul im Zustand einer beweglichen Schütte ausgeführt.

Gemäß einem weiteren Ausführungsbeispiel der Erfindung kann das Behältermodul innerhalb des Gehäusemoduls von dem Zustand als fixierter Behälter in den Zustand als bewegliche Schütte überführt werden.

Gemäß einem weiteren Ausführungsbeispiel der Erfindung weist das Behältermodul im Zustand als fixierter Behälter eine Staufachklappe auf, wobei das Behältermodul im Zustand als bewegliche Schütte die Staufachklappe nicht aufweist.

Gemäß einem weiteren Ausführungsbeispiel der Erfindung ist die Staufachklappe an dem Gehäusemodul angebracht, wenn sich das Behältermodul im Zustand als bewegliche Schütte befindet.

Gemäß einem weiteren Ausführungsbeispiel der Erfindung ist ein Gehäusemodul für ein Gepäckfach für ein Luftfahrzeug zur Anbringung in einem Überkopfbereich (beispielsweise einer Passagierkabine) angegeben, wobei das Gehäusemodul zur Aufnahme eines oben und im Folgenden beschriebenen Behältermoduls ausgeführt ist.

Gemäß einem weiteren Ausführungsbeispiel der Erfindung ist ein Luftfahrzeug, beispielsweise ein Passagierflugzeug mit zwei oder mehr Sitzreihen angegeben, über denen die oben und im Folgenden beschriebenen Gepäckfächer aufgereiht sind.

Gemäß einem weiteren Ausführungsbeispiel der Erfindung ist ein Verfahren zum Umbau eines transformierbaren Behältermoduls in einem Überkopfbereich einer Passagierkabine eines Transportmittels angegeben, bei dem in einem ersten Schritt das Behältermodul in einem Gehäusemodul aufgenommen wird. Das Behältermodul dient der Aufnahme von Gepäckstücken. In einem zweiten Schritt erfolgt ein Fixieren des Behältermoduls in dem Gehäusemodul im Zustand eines fixierten Behälters. In einem dritten Schritt kann dann das Behältermodul innerhalb des Gehäusemoduls in den Zustand einer beweglichen Schütte umgebaut (transformiert) werden.

Ein aufwändiger Ausbau des ursprünglichen Staufachs und ein Einbau eines neuen Staufachs sind nicht erforderlich.

Im Folgenden werden mit Verweis auf die Figuren Ausführungsbeispiele der Erfindung beschrieben.

### Kurze Beschreibung der Figuren

Fig. 1A zeigt einen Ausschnitt einer Flugzeugkabine mit einer Reihe von Gepäckfächern gemäß einem Ausführungsbeispiel der Erfindung mit fest verankerten Staufächern (Fixed Bins).
Fig. 1B zeigt die Gepäckfächer der Fig. 1A in geöffnetem Zustand.
Fig. 2A zeigt eine Reihe von Gepäckfächern gemäß einem Ausführungsbeispiel der Erfindung mit beweglichen Schütten (Pivot-Bins, auch Movable-Bins genannt).
Fig. 2B zeigt die Gepäckfächer der Fig. 2A im heruntergeklappten Zustand.
Fig. 3A zeigt eine Reihe von Gepäckfächern mit transformierbaren Behältermodulen gemäß einem Ausführungsbeispiel der Erfindung im sogenannten beweglichen Modus.
Fig. 3B zeigt die Gepäckfächer der Fig. 3A, wobei eines heruntergeklappt ist.
Fig. 4A zeigt die Gepäckfächer der Fig. 3A und 3B im sogenannten starren Modus oder Fixed Mode.
Fig. 4B zeigt ein Gepäckfach der Fig. 4A im geöffneten Zustand.
Fig. 5 zeigt ein Luftfahrzeug mit zwei Reihen von Gepäckfächern gemäß einem Ausführungsbeispiel der Erfindung.
Fig. 6 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

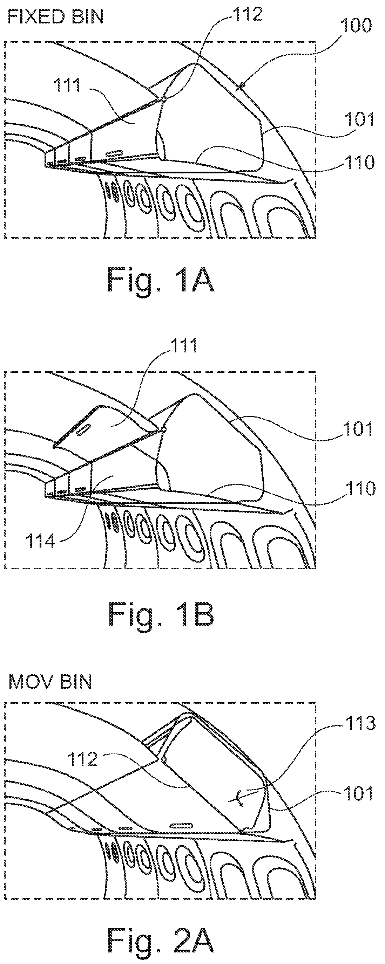

Fig. 1A zeigt eine Reihe von mehreren Gepäckfächern 100 mit Staufächern 110, die auf der rechten Seite im Überkopfbereich einer Passagierkabine eines Transportmittels angeordnet sind. Beispielsweise handelt es sich hier um eine Passagierkabine eines Flugzeugs. Die hier und im Folgenden beschriebenen Gepäckfächer können aber auch in einem Wasserfahrzeug, einem Straßenfahrzeug (zum Beispiel einem Bus) oder einem Schienenfahrzeug installiert sein.

Es handelt sich hierbei um fest eingebaute, starre Gepäckfächer. Alle der hier und im Folgenden beschriebenen Gepäckfächer weisen ein Gehäusemodul 101 auf, das jeweils identisch ausgeführt ist und zur Aufnahme entsprechender Behältermodule dient. Im Ausführungsbeispiel der Fig. 1A und 1B handelt es sich bei den Behältermodulen (Staufächer) 110 um sogenannte starre Behältermodule oder Fixed Bins, die nicht bewegt werden können. Auf der Vorderseite weisen die Behältermodule eine Klappe 111 auf, die über die Achse 112 gelagert ist.

Fig. 1B zeigt die Gepäckfächer der Fig. 1A, wobei das erste Gepäckfach aufgeklappt ist.

Fig. 2A zeigt eine andere Konfiguration. Hier ist in dem Gehäusemodul 101 ein sogenanntes Pivot-Bin in Form einer beweglichen Schütte 112 eingebaut. Im Zustand der Fig. 2A befindet sich die Schütte im hochgeklappten Zustand und kann entlang dem Pfeil 113 nach unten aufgeklappt werden.

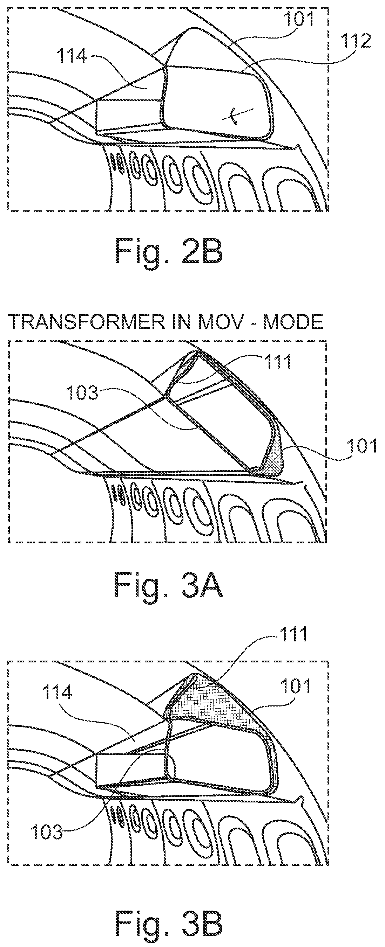

Dies ist in Fig. 2B gezeigt. Im heruntergeklappten Zustand kann das Gepäck durch die Öffnung 114 in die Schütte eingeführt werden.

Fig. 3A zeigt ein Gehäusemodul 101, in das ein transformierbares Behältermodul 103 in Form einer beweglichen Schütte eingebaut ist. Die Klappe 111 ist hierbei an der Innenseite des Gehäusemoduls 101 befestigt. Fig. 3A zeigt die Schütte 103 im hochgeklappten Zustand.

Fig. 3B zeigt die Schütte 103 im heruntergeklappten Zustand. Wie in Fig. 3B zu erkennen, befindet sich die Klappe 111 immer noch innerhalb des Gehäusemoduls 101, so dass das Gepäck durch die Öffnung 114 in die Schütte eingeführt werden kann.

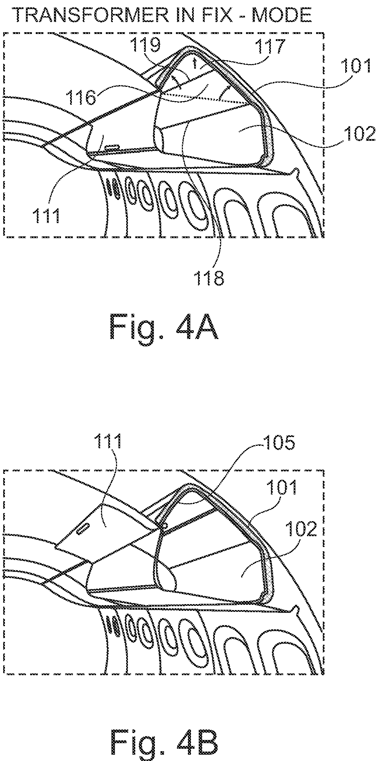

Fig. 4A zeigt das Gehäusemodul 101 mit dem transformierbaren Behältermodul, diesmal im Zustand als fixierter Behälter 102. In diesem Zustand sind die beiden Deckenelemente 116, 117 des Behältermoduls 102 nach oben geklappt und gegebenenfalls am Gehäusemodul 101 befestigt. Um das Nachobenklappen der Deckenelemente 116, 117 zu ermöglichen, sind beispielsweise Scharniere 118, 119 vorgesehen, die die beiden Deckenelemente miteinander verbinden bzw. das erste Deckenelement 116 mit der Rückseite des transformierbaren Behältermoduls 102 verbinden.

Wie in Fig. 4A zu erkennen, ist die Klappe 111 nun nach unten versetzt und am Gehäusemodul angebracht, so dass sie zum Öffnen und Schließen des Behältermoduls 102 verwendet werden kann.

Fig. 4B zeigt das Gepäckfach im Modus der Fig. 4A im geöffneten Zustand, in welchem die Klappe 111 nach vorne geklappt ist.

Die umgebende Geometrie (Housing bzw. Gehäusemodul 101) des transformierbaren Behältermoduls 102, 103 (Transformer - OHSC) ermöglicht sowohl den Einbau eines Fixed Bins als auch den Einbau eines Pivot-Bins. In die Kabine können somit Fixed Bins und/oder Pivot-Bins und/oder Transformer Bins installiert werden, ohne dass hierfür Änderungen am Gehäusemodul 101 vorgenommen werden müssen.

Die Schütte des Transformer Bins 102, 103 kann sowohl als Fixed Bin fungieren als auch als Pivot-Bin:
Im Modus des Pivot-Bins ist die Schütte auf das minimal angeforderte Staufachvolumen reduziert. So kann die Schütte auch voll beladen geschlossen werden. Das Transformer Bin erzeugt im geschlossenen Zustand einen entsprechenden Raumeindruck der Kabine.

Die Staufachklappe, welche im Modus des Fixed Bins benötigt wird, um das Gepäck zu sichern, ist an der Schütte befestigt und klappt beim Öffnen zusätzlich auf. Eine weitere Möglichkeit besteht darin, die Klappe als Bestandteil des Gehäusemoduls 101 auszuführen und dort durch ein Schienensystem bei Bedarf herauszuziehen. Das Schienensystem ist in Fig. 4B durch Bezugszeichen 105 dargestellt.

Im Fixed Bin Modus ist die Schütte im geöffneten Zustand verriegelt und wird mit der zusätzlichen Klappe geschlossen. Die Schütte vergrößert durch eine Änderung der Geometrie in einem von der Kabine aus nicht sichtbaren Bereich das Stauvolumen. Dadurch kann der in diesem Zustand entstehende zusätzliche Raum im Gehäusemodul effizient genutzt werden.

Ein Vorteil des erfindungsgemäßen Gepäckfachs besteht darin, dass es eine Basis-Architektur bereitstellt, in die ein herkömmliches Fixed Bin und/oder ein herkömmliches Pivot-Bin eingebaut werden kann. Auf diese Weise ist es möglich, die Staufächer bei einer Umkonfigurierung der Flugzeugkabine ohne großen Aufwand auszutauschen, ohne dass hierfür die Anschlüsse, Anbindungen oder Flugzeugsysteme beeinflusst bzw. geändert werden müssen. In anderen Worten kann die Flugzeugkabine von einer reinen Fixed Bin-Staufachanordnung in eine reine Pivot-Bin-Staufachanordnung umkonfiguriert werden, ohne tiefgreifende Änderungen an den angrenzenden Bauteilen oder den angrenzenden Systemen vornehmen zu müssen.

Ein weiterer Vorteil besteht darin, dass ein transformierbares Behältermodul bereitgestellt wird, welches zwischen den beiden Staufacharten hin- und hergewechselt werden kann.

Betreibt die Fluggesellschaft beispielsweise ein differenziertes Kabinenprodukt, um durch diverse Leistungen wie etwa die Erhöhung des Komforts zusätzlich Einnahmequellen zu schaffen, wird dies mittels einer unterschiedlichen Architektur und der daraus resultierenden deutlich unterschiedlichen Kabinenanmutungen visuell unterstützt. Zwei Kabinen sind demnach in einer Kabine vereint.

Das transformierbare Behältermodul (Transformer Bin) kann als flexibles Übergangsstaufach eingesetzt werden, welches bei kurzfristigen Änderungen der Kabinenklasse als effizientes Unterscheidungs- und Abgrenzungskriterium hinsichtlich der Kabinenarchitektur, deren Raumeindruck und des angebotenen Staufachvolumens wirken kann.

Somit kann sich eine geräumige futuristische Kabine mit mittlerem Staufachvolumen in eine praktische Kabine mit großen Staufachvolumen wandeln.

Eine weitere Anwendungsmöglichkeit des erfindungsgemäßen Gepäckfachs besteht in der Erstellung einer sogenannten Pivot-Bin-Kabine, die sich bei überdurchschnittlichem Bedarf an Stauraum mittels des transformierbaren Behältermoduls anpassen kann. In das Gehäuse (Housing) der Kabine werden hauptsächlich Pivot-Bins eingebaut. Anstelle von ein oder mehreren Pivot-Bins bzw. Pivot-Staufächern werden Transformer Bins im Zustand des Movable Modus eingebaut. So erhält man eine reine Pivot-Bin Kabine. Wird der Stauraum in der Kabine knapp, hat man eine Reserve an Stauraum indem man die Transformer Bins vom Movable Modus in den Fixed Bin Modus transformiert und das Staufachvolumen erweitert.

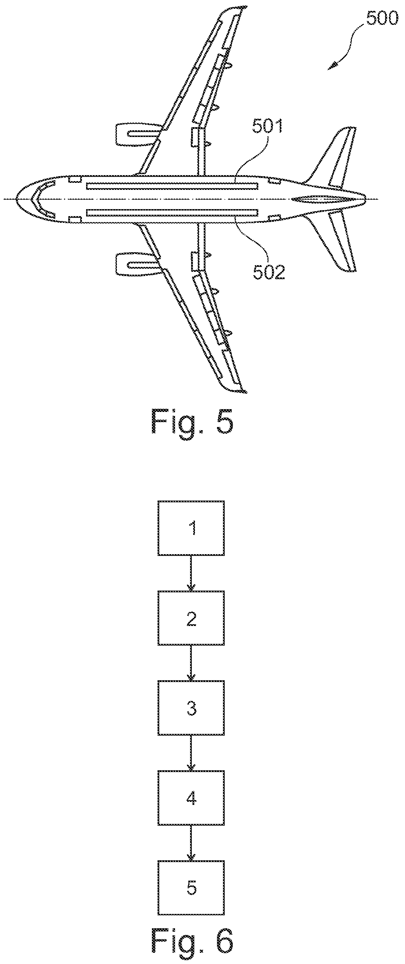

Fig. 5 zeigt ein Flugzeug 500 mit zwei Reihen an Gepäckfächern. Die eine Gepäckfachreihe 501 ist auf der Steuerbordseite im Überkopfbereich eingebaut und die andere Reihe 502 auf der Backbordseite der Passagierkabine.

Es können noch weitere solche Gepäckfachreihen vorgesehen sein, beispielsweise im mittleren Bereich der Passagierkabine.

Fig. 6 zeigt ein Flussdiagramm eines Verfahrens gemäß einem Ausführungsbeispiel der Erfindung. In Schritt 1 wird ein transformierbares Behältermodul in ein entsprechendes Gehäusemodul eingebaut. In Schritt 2 wird das Behältermodul in dem Gehäusemodul fixiert, so dass es den Zustand eines fixierten Behälters (Fixed Bin Modus) einnimmt. In Schritt 3 wird die Decke (bestehend aus einem oder mehreren Deckenelementen) des Behältermoduls nach oben geklappt und am Gehäusemodul befestigt. In Schritt 4 wird die Klappe des Behältermoduls nach oben geklappt und ebenfalls am Gehäusemodul befestigt und in Schritt 5 kann dann das Behältermodul (welches jetzt den Zustand einer beweglichen Schütte eingenommen hat) nach oben in das Gehäusemodul eingeklappt werden.

Im Folgenden werden verwendete Begriffe erläutert:
OHSC: Over Head Storage Compartment: Gepäckstaufach in der Kabine, in der Regel über den Passagiersitzen angeordnet.
Fixed Bin: Staufach mit einer fixen Position. Eine Klappe schließt das Fach und verhindert ein Herausfallen des Gepäckstückes.
Movable Bin oder Pivot-Bin: Bewegliches Staufach, welches in einem Gehäuse eingebaut ist.

Ergänzend sei darauf hingewiesen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Transformierbares Behältermodul (102, 103) für ein Gepäckfach für ein Luftfahrzeug zur Anbringung in einem Gehäusemodul (101) in einem Überkopfbereich,
wobei das Behältermodul (102, 103) zur Aufnahme von Gepäckstücken ausgeführt ist;
wobei das Behältermodul (102, 103) zum starren Einbau in das Gehäusemodul (101) im Zustand eines fixierten Behälters (102) und zum beweglichen Einbau in das Gehäusemodul (101) im Zustand einer beweglichen Schütte (103) ausgeführt ist;
**dadurch gekennzeichnet, dass** das Behältermodul ein Deckensegment aufweist, das zum Einnehmen des Zustands des fixierten Behälters nach oben geklappt wird, wobei das Behältermodul im Zustand als fixierter Behälter (102) ein größeres Speichervolumen aufweist als im Zustand als bewegliche Schütte (103).

2. Gepäckfach für ein Luftfahrzeug zur Anbringung in einem Überkopfbereich, das Gepäckfach aufweisend:
ein universelles Gehäusemodul (101);
ein transformierbares Behältermodul (102, 103) nach Anspruch 1;
wobei das Gehäusemodul (101) zur Aufnahme des Behältermoduls (102, 103) ausgeführt ist.

3. Gepäckfach nach Anspruch 2,
wobei das Behältermodul (102, 103) innerhalb des Gehäusemoduls (101) von dem Zustand als fixierter Behälter (102) in den Zustand als bewegliche Schütte (103) überführbar ist.

4. Gepäckfach nach Anspruch 3,
wobei das Behältermodul (102, 103) im Zustand als fixierter Behälter (102) eine Staufachklappe (111) aufweist; und
KK:CGS
wobei das Behältermodul (102, 103) im Zustand als bewegliche Schütte (103) die Staufachklappe (111) nicht aufweist.

5. Gepäckfach nach Anspruch 4,
wobei die Staufachklappe (111) an dem Gehäusemodul (101) angebracht ist, wenn sich das Behältermodul (102, 103) im Zustand als bewegliche Schütte befindet.

6. Gepäckfach nach Anspruch 4 oder 5, weiterhin aufweisend:
ein Schienensystem (105) zum Führen der Staufachklappe von einem Zustand, in dem sie an dem Gehäusemodul (101) befestigt ist, in einen Zustand, in dem sie an dem Behältermodul (102, 103) befestigt ist.

7. Gepäckfach nach einem der Ansprüche 2 bis 6, weiterhin aufweisend:
eine Verriegelung (106) zum Verriegeln des Behältermoduls (102), wenn es sich im Zustand als fixierter Behälter (102) befindet.

8. Luftfahrzeug mit zwei Reihen von Gepäckfächern nach einem der Ansprüche 2 bis 7.

9. Verfahren zum Umbau eines transformierbaren Behältermoduls (102, 103) in einem Überkopfbereich einer Passagierkabine eines Transportmittels, das Verfahren aufweisend die Schritte:
Aufnahme des Behältermoduls (102, 103) in einem Gehäusemodul (101);
wobei das Behältermodul (102, 103) zur Aufnahme von Gepäckstücken ausgeführt ist;
Fixieren des Behältermoduls (102, 103) in dem Gehäusemodul (101) im Zustand eines fixierten Behälters (102);
Umbau des Behältermoduls (102) in den Zustand einer beweglichen Schütte (103) innerhalb des Gehäusemoduls (101);
wobei das Behältermodul zum Einnehmen des Zustands des fixierten Behälters ein Deckensegment aufweist, das nach oben geklappt wird, wobei das Behältermodul im Zustand als fixierter Behälter (102) ein größeres Speichervolumen aufweist als im Zustand als bewegliche Schütte (103).

## Claims

1. A transformable container module (102, 103) for a storage compartment for an aircraft for mounting in a housing module (101) in an overhead region,
wherein the container module (102, 103) is configured to accommodate items of luggage;
wherein the container module (102, 103) is configured for rigid installation in the housing module (101) in the state of a fixed container (102) and for movable installation in the housing module (101) in the state of a movable chute (103);
**characterized in that** the container module comprises a ceiling segment which is hinged upwards for taking up the state of the fixed container, wherein the container module in the state of the fixed container (102) has a larger storage volume than in the state of the movable chute (103).

2. A storage compartment for an aircraft for mounting in an overhead region, the storage compartment comprising:
a universal housing module (101):
a transformable container module (102, 103) according to claim 1;
wherein the housing module (101) is configured to receive the container module (102, 103)

3. The storage compartment of claim 2,
wherein the container module (102, 103) is convertible within the housing module (101) from its state as a fixed container (102) to its state as a movable chute (103).

4. The storage compartment of claim 3,
wherein the container module (102, 103) in its state as a fixed container (102) comprises a hinged storage compartment lid (111); and
wherein the container module (102, 103) in its state as a movable chute (103) does not contain the storage compartment lid (111).

5. The storage compartment of claim 4,
wherein the hinged storage compartment lid (111) is mounted on the housing module (101) when the container module (102, 103) is in its state as a movable chute.

6. The storage compartment of claim 4 or 5, further comprising:
a rail system (105) for guiding the hinged storage compartment lid from a state in which the hinged storage compartment lid is affixed to the housing module (101) to a state in which the hinged storage compartment lid is affixed to the container module (102, 103).

7. The storage compartment of any one of claims 2 to 6, further comprising:
a locking arrangement (106) for locking the container module (102) when said container module is in its state as a fixed container (102).

8. An aircraft with two rows of storage compartments of any one of claims 1 to 7.

9. A method for converting a transformable container module (102, 103) in an overhead region of a passenger cabin of a transportation means, the method comprising the steps of:
accommodating the container module (102, 103) in a housing module (101);
wherein the container module (102, 103) is designed to accommodate items of luggage;
affixing the container module (102, 103) in the housing module (101) in its state of a fixed container (102);
converting the container module (102) within the housing module (101) to its state as a movable chute (103);
wherein the container module comprises, for talking up the state of the fixed container, a ceiling segment which is hinged upwards, wherein the container module in the state of the fixed container (102) has a larger storage volume than in the state of the movable chute (103).

## Revendications

1. Module de contenant transformable (102, 103) pour un compartiment à bagages pour un aéronef destiné à être rapporté dans un module de boîtier (101) d'une zone au-dessus de la tête,
le module de contenant (102, 103) étant réalisé pour recevoir des bagages ;
le module de contenant (102, 103) étant réalisé pour être monté de manière rigide dans le module de boîtier (101) dans l'état d'un contenant fixé (102) et pour être monté de manière mobile dans le module de boîtier (101) dans l'état d'un bac mobile (103) ;
**caractérisé en ce que** le module de contenant présente un segment de plafond qui est rabattu vers le haut pour prendre l'état du contenant fixé, dans lequel le module de contenant présente dans l'état de contenant fixé (102) un volume de stockage supérieur à celui dans l'état de bac mobile (103).

2. Compartiment à bagages pour un aéronef destiné à être rapporté dans une zone au-dessus de la tête, le compartiment à bagages présentant :
un module de boîtier universel (101) ;
un module de contenant transformable (102, 103) selon la revendication 1 ;
dans lequel le module de boîtier (101) est réalisé pour recevoir le module de contenant (102, 103).

3. Compartiment à bagages selon la revendication 2,
dans lequel le module de contenant (102, 103) est transférable à l'intérieur du module de boîtier (101) de l'état de contenant fixé (102) dans l'état de bac mobile (103).

4. Compartiment à bagages selon la revendication 3,
dans lequel le module de contenant (102, 103) présente un abattant d'arrimage (111) dans l'état de contenant fixé (102) ; et
dans lequel le module de contenant (102, 103) ne présente pas d'abattant d'arrimage (111) dans l'état de bac mobile (103).

5. Compartiment à bagages selon la revendication 4,
dans lequel l'abattant d'arrimage (111) est rapporté sur le module de boîtier (101) lorsque le module de contenant (102, 103) se trouve dans l'état de bac mobile.

6. Compartiment à bagages selon la revendication 4 ou 5, présentant en outre :
un système de rail (105) destiné à guider l'abattant d'arrimage d'un état, dans lequel il est fixé au module de boîtier (101), dans un état dans lequel il est fixé au module de contenant (102, 103).

7. Compartiment à bagages selon une des revendications 2 à 6, présentant en outre : un verrouillage (106) destiné à verrouiller le module de contenant (102) lorsqu'il se trouve dans l'état de contenant fixé (102).

8. Aéronef comportant deux rangées de compartiments à bagages selon une des revendications 2 à 7.

9. Procédé de transformation d'un module de contenant transformable (102, 103) dans une zone au-dessus de la tête d'une cabine passagers d'un moyen de transport, le procédé présentant les étapes consistant à :
recevoir le module de contenant (102, 103) dans un module de boîtier (101) ;
le module de contenant (102, 103) étant réalisé pour recevoir des bagages ;
fixer le module de contenant (102, 103) dans le module de boîtier (101) dans l'état d'un contenant fixé (102) ;
transformer le module de contenant (102) dans l'état d'un bac mobile (103) à l'intérieur du module de contenant (101) ;
le module de contenant présentant un segment de plafond qui est rabattu vers le haut pour prendre l'état de contenant fixé, le module de contenant présentant dans l'état de contenant fixé (102) un volume de stockage supérieur à celui dans l'état de bac mobile (103).
